(19) Europäisches Patentamt / European Patent Office / Office européen des brevets

(11) **EP 4 069 566 B1**

(12) **FASCICULE DE BREVET EUROPEEN**

(45) Date de publication et mention de la délivrance du brevet:
**06.03.2024   Bulletin 2024/10**

(21) Numéro de dépôt: **20807426.0**

(22) Date de dépôt: **19.11.2020**

(51) Classification Internationale des Brevets (IPC):
**B60W 30/12** *(2020.01)*     **B60W 50/00** *(2006.01)*
**B60W 30/045** *(2012.01)*     **B60W 40/072** *(2012.01)*
**B60W 30/02** *(2012.01)*     **B60W 40/10** *(2012.01)*

(52) Classification Coopérative des Brevets (CPC):
**B60W 30/12; B60W 30/02; B60W 30/045;**
**B60W 40/072; B60W 40/10; B60W 50/0097;**
**B60W 50/0098;** B60W 2050/0033; B60W 2420/40;
B60W 2510/207; B60W 2520/10; B60W 2520/12;
B60W 2520/14; B60W 2552/30

(86) Numéro de dépôt international:
**PCT/EP2020/082772**

(87) Numéro de publication internationale:
**WO 2021/110423 (10.06.2021 Gazette 2021/23)**

(54) **MODULE D'APPRENTISSAGE, DISPOSITIF DE CONTRÔLE EN TEMPS RÉEL DE TRAJECTOIRE ET PROCÉDÉ ASSOCIÉS**

TRAININGSMODUL UND ZUGEHÖRIGE ECHTZEITWEGÜBERWACHUNGSVORRICHTUNG UND VERFAHREN

TRAINING MODULE, AND ASSOCIATED REAL-TIME PATH MONITORING DEVICE AND METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **04.12.2019   FR 1913757**

(43) Date de publication de la demande:
**12.10.2022   Bulletin 2022/41**

(73) Titulaires:
• **Renault s.a.s**
  **92100 Boulogne Billancourt (FR)**
• **NISSAN MOTOR Co., Ltd.**
  **Yokohama-shi, Kanagawa 221-0023 (JP)**

(72) Inventeurs:
• **DE SCHRYNMAKERS, Julien**
  **41400 Monthou-sur-Cher (FR)**
• **QUILLIARD, Raphael**
  **91300 Massy (FR)**

(74) Mandataire: **Renault Group**
  **Renault s.a.s.**
  **1 avenue du Golf**
  **FR TCR AVA 055**
  **78084 Guyancourt Cedex (FR)**

(56) Documents cités:
**KR-A- 20170 114 660     US-A1- 2003 158 641**

• **Simon Mustaki: "Outils de pré-calibration numérique des lois de commande de systèmes: Application aux aides à la conduite et au véhicule autonome", , 8 juillet 2019 (2019-07-08), XP055714240, Extrait de l'Internet: URL:https://tel.archives-ouvertes.fr/tel-0 2297892/document [extrait le 2020-07-13]**
• **JUNG CHANHEE ET AL: "Parameter adaptive steering control for autonomous driving", 17TH INTERNATIONAL IEEE CONFERENCE ON INTELLIGENT TRANSPORTATION SYSTEMS (ITSC), IEEE, 8 octobre 2014 (2014-10-08), pages 1462-1467, XP032685783, DOI: 10.1109/ITSC.2014.6957892**

EP 4 069 566 B1

**Description**

La présente invention concerne un dispositif de contrôle de trajectoire d'un véhicule.

La présente invention concerne plus particulièrement un dispositif de contrôle en temps réel de la trajectoire d'un véhicule pour compenser la courbure d'un virage sur la voie du véhicule, un module anticipateur intégré dans le dispositif et un procédé de mise en oeuvre d'un tel dispositif.

Les véhicules automobiles peuvent être équipés de dispositifs de contrôle de trajectoire conçus de telle sorte qu'ils permettent d'assister le conducteur pour maintenir le véhicule dans la voie, notamment pour maintenir le véhicule au centre de la voie. De tels procédés de contrôle sont par exemple montrés dans le document "Outils de pré-calibration numérique des lois de commande de systèmes: application aux aides à la conduite et au véhicule autonome", par Simon Mustaki, ainsi que dans l'article "Parameter adaptive steering control for autonomous driving", par Chanhee Jung et al.. De tels dispositifs peuvent également se trouver sur les véhicules autonomes où la conduite est entièrement déléguée au véhicule. Ils agissent sur la direction du véhicule en modifiant l'angle de braquage des roues directrices du véhicule. La détermination de l'angle de braquage adapté à la situation du véhicule repose sur un algorithme de commande contenu dans le dispositif. Il met en oeuvre une loi de commande et utilise un modèle dynamique du véhicule. Une telle loi de commande qui aide au maintien du véhicule au centre de la voie est couramment désignée par l'abréviation anglo-saxonne « LCA » pour « Lane Centering Assist ».

Pour des raisons de confort, la commande doit être douce et ne pas générer d'à-coups qui pourraient gêner/surprendre le conducteur.

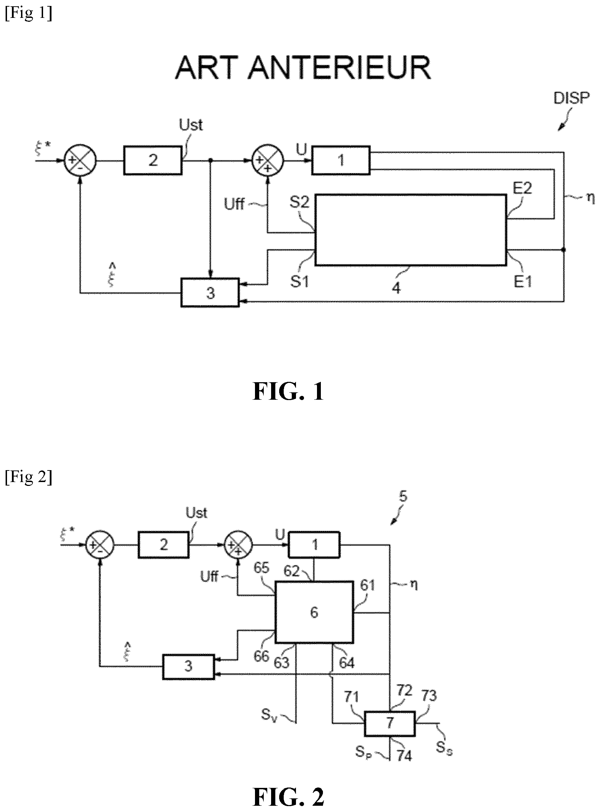

La figure 1 décrit un dispositif DISP de contrôle en temps réel de trajectoire d'un véhicule, visant notamment à préserver le confort des passagers, selon l'état de la technique, et illustre ledit dispositif DISP de contrôle en temps réel de trajectoire appliqué à un véhicule 1 automobile à traction entraîné par un moteur comportant deux roues directrices, de préférence les roues avant du véhicule, contrôlées par un actionneur piloté par un signal de commande u.

Dans ce qui suit l'opérateur $\dot{x}$ désigne la dérivée de $x$.

Les roues avant directrices du véhicule 1 sont contrôlées par un actionneur piloté par un signal de commande U.

Le véhicule 1 comprend en outre un capteur destiné à mesurer un paramètre du véhicule, tel que la vitesse longitudinale réelle V, l'angle $\delta$ de braquage réalisé des roues avant, la vitesse de lacet $\dot{\Psi}$ du véhicule ou l'angle de direction, par exemple l'angle de direction statique correspondant à l'angle des roues avant à un rapport de démultiplication près. Le véhicule peut en outre être équipé d'une caméra optique permettant de fournir au modèle d'une ligne directrice de la voie de circulation du véhicule sous la forme d'un polynôme y(x).

Le véhicule 1 est équipé d'un calculateur embarqué comprenant un dispositif contrôleur 2 pour générer un signal de commande Ust de façon à rendre conforme un vecteur d'état physique $\xi$ du véhicule à un vecteur d'état de consigne $\xi^*$ pour assurer le suivi par le véhicule 1 de l'une trajectoire souhaitée.

Le calculateur embarqué comprend en outre un observateur 3 pour générer en temps réel un vecteur d'état estimé $\hat{\xi}$ de suivi de trajectoire du véhicule 1 se déplaçant à la vitesse V à partir de la commande Ust et d'un vecteur $\eta$ de mesure actuelle de variables d'état corrélé au vecteur d'état physique $\xi$ de suivi de trajectoire du véhicule 1.

L'observateur 3 a pour but de générer en temps réel un vecteur $\hat{\xi}$ d'état estimé représentant le plus fidèlement possible le vecteur $\xi$ d'état effectif.

Le calculateur embarqué comporte en outre un module anticipateur 4 additionnant une deuxième commande Uff de braquage à la première commande Ust de braquage produite par le dispositif 2 pour compenser le virage.

La deuxième commande Uff de braquage est déterminée en fonction d'une courbure $\gamma$ff d'un virage, de la vitesse V du véhicule et d'un gradient de sous-virage $\Delta$ défini comme étant un angle de roues nécessaire pour que le véhicule subisse une accélération latérale de 1 m/s$^2$.

La deuxième commande de braquage Uff permet au véhicule 1 de franchir le virage de courbure $\gamma$ff. La deuxième commande est ajoutée au signal de commande Ust de sorte que le dispositif contrôleur 2 régule la trajectoire du véhicule 1 pour que le véhicule 1 suive une route droite.

Par conséquent, le signal de commande U est égal à la somme de la première commande Ust et de la deuxième commande Ust.

Le dispositif de contrôle en temps réel de trajectoire du véhicule 1 comprend l'actionneur, le capteur de vitesse, le capteur pour mesurer un angle $\delta$ de braquage, le capteur pour mesure la vitesse de lacet $\dot{\Psi}$, une caméra, le dispositif 2, l'observateur 3 et le module 4.

La caméra permet de déterminer le polynôme y(x).

Le vecteur d'état physique $\xi$ du véhicule est égal à :

$$\xi = \begin{pmatrix} \dot{\Psi} \\ \Psi \\ \dot{yl} \\ yl \\ \dot{\delta} \\ \delta \\ \int -yl \end{pmatrix} \quad (1)$$

où $\Psi$ est l'angle relatif de cap entre l'axe du véhicule et la tangente à la trajectoire de référence, $\dot{yl}$ est la vitesse latéral d'éloignement du véhicule par rapport à la trajectoire idéale du véhicule, yl est l'écart latéral entre le centre de gravité du véhicule et le centre de la voie du véhicule et la tangente à la trajectoire en avant du véhicule, $\dot{\delta}$ est la variation de l'angle de braquage et $\int$-yl représente l'intégrale de la position latérale.

Le vecteur d'état de consigne $\xi^*$ est égal à :

$$\xi^* = \begin{pmatrix} \dot{\Psi}_{ref} \\ \Psi_{ref} \\ \dot{yl}_{ref} \\ yl_{ref} \\ \dot{\delta}_{ref} \\ \delta_{ref} \\ \int -yl_{ref} \end{pmatrix} \quad (2)$$

Et le vecteur d'état estimé $\hat{\xi}$ est égal à :

$$\hat{\xi} = \begin{pmatrix} \dot{\Psi}_{est} \\ \Psi_{est} \\ \dot{yl}_{est} \\ yl_{est} \\ \dot{\delta}_{est} \\ \delta_{est} \\ \int -yl_{est} \end{pmatrix} \quad (3)$$

Le vecteur $\xi$ est partiellement inconnu car l'état interne du véhicule 1 n'est pas accessible dans sa totalité. Cinq états sont mesurés et deux états sont reconstruits à partir de l'observateur 3.

L'observateur 3 met en oeuvre un modèle de véhicule connu sous le nom de modèle bicyclette et se présente sous la forme matricielle suivante :

$$\dot{\hat{\xi}} = A \cdot \hat{\xi} + B_\delta \cdot \delta_{req} + B_\rho \cdot \gamma\text{ff} \quad (4)$$

où $\delta_{req}$ est la somme du signal de commande Ust et de la deuxième commande de braquage Uff, et $\gamma$ff est le rayon de courbure du virage.

La valeur de l'angle $\delta_{ref}$ est égale à la commande Uff.

L'angle de braquage $\delta$ et l'angle de braquage $\delta_{ref}$ de référence sont reliés par une fonction de transfert du deuxième ordre modélisant la direction assistée.

La matrice A comprend des coefficients variables et constants au cours d'une même séquence de roulage dépendants, et dépendent des paramètres du véhicule 1 suivants :

- la rigidité de dérive des roues avant Cf ;
- la rigidité de dérive des roues arrière $C_r$ ;
- la distance de centre de gravité à l'essieu avant $I_f$ ;
- la distance de centre de gravité à l'essieu arrière $I_r$ ;
- la masse totale du véhicule m ;
- la vitesse du véhicule V;
- l'inertie du véhicule autour d'un axe vertical passant par son centre de gravité J;
- un coefficient amortissement de la fonction du deuxième ordre $\zeta$; et
- une pulsation propre de la fonction de transfert du deuxième ordre $\omega$.

La matrice $B_\delta$ dépend de la pulsation propre $\omega$ et de la vitesse V, et la matrice $B_\rho$ dépend de la vitesse V.

La valeur des paramètres du véhicule 1 est définie lorsque le véhicule 1 n'est pas chargé et la pression des pneus est à leur valeur optimale, les paramètres étant fixes pendant toute la durée de vie du véhicule 1.

Le dispositif 3 reçoit sur une première entrée un vecteur $\eta$ de mesures actuelles corrélé au vecteur $\xi$ d'état physique par une relation instrumentale C suivante :

$$\eta = \begin{bmatrix} 1 & 0 & 0 & 0 & 0 & 0 & 0 \\ 0 & 1 & 0 & 0 & 0 & 0 & 0 \\ 0 & 0 & 0 & 1 & 0 & 0 & 0 \\ 0 & 0 & 0 & 0 & 0 & 1 & 0 \\ 0 & 0 & 0 & 0 & 0 & 0 & 1 \end{bmatrix} \cdot \xi \qquad (5)$$

Le vecteur $\eta$ de mesures actuelles comporte cinq composantes :

$$\eta = \begin{pmatrix} \dot{\Psi} \\ \Psi \\ yl \\ \delta \\ \int -yl \end{pmatrix} \qquad (6)$$

La vitesse de lacet $\dot{\Psi}$ est mesurée par le capteur de vitesse de lacet.

La caméra détermine le polynôme y(x).

L'observateur 3 reçoit sur une deuxième entrée la commande Ust égale à l'angle de braquage $\delta$.

Une troisième entrée de l'observateur 3 est reliée à une première sortie S1 du module anticipateur 4.

Le module anticipateur 4 comprend en outre une deuxième sortie S2 reliée à un additionneur de sorte que le signal de commande U soit la somme du signal de commande Ust et du signal de commande Uff, et une première entrée E1 reliée au véhicule 1 de manière à recevoir le vecteur $\eta$ de mesures actuelles et une deuxième entrée E2 reliée au véhicule 1 de manière à recevoir le polynôme y(x).

Lors du virage de courbure $\gamma$ff, le module 4 corrige l'angle $\Psi$ relatif de cap, la vitesse de lacet $\dot{\Psi}$ et l'angle de roue $\delta$ à partir du polynôme y(x) et de la vitesse V.

La boucle fermée comprenant le véhicule 1, les dispositifs 2 et 3, minimise le vecteur d'état $\xi$ autour du vecteur nul correspondant à une ligne droite, le vecteur consigne $\xi^*$ étant égal au vecteur nul.

Les dynamiques de la boucle fermée sont lentes pour assurer un bon niveau de confort.

Le module anticipateur 4 fonctionne en boucle ouverte pour assurer une bonne prestation lors des prises de virage.

La deuxième commande Uff de braquage est déterminée en fonction de la courbure $\gamma$ff du virage, de la vitesse V du véhicule et d'un gradient de sous-virage $\Delta$ défini comme étant un angle de roues nécessaire pour que le véhicule subisse une accélération latérale de 1 m/s$^2$.

Cependant, le module anticipateur 4 est basé sur le modèle bicyclette et n'évolue pas pendant les missions du véhicule 1, et pendant la durée de vie du véhicule.

L'angle de braquage $\delta$ corrigé par le module anticipateur 4 dépend de la courbure $\gamma$ff du virage et de la vitesse V du véhicule, mais également du gradient de sous-virage $\Delta$.

Le gradient de sous-virage $\Delta$ est un paramètre incertain et non mesurable. Ce paramètre quantifie le comportement du véhicule lors de sa prise de virage. La plage de variation de ce paramètre est importante entraînant une mauvaise consigne d'angle de braquage et un décentrage important du véhicule lors de la prise d'un virage.

Lorsque les paramètres physiques du véhicule 1 évoluent, par exemple lors d'un chargement de masse dans le coffre, ou lorsque les pneus sont dégonflés ou abîmés, les paramètres du module anticipateur 4 ne sont plus adaptés et génèrent une perte de prestation générant des prises de virage avec notamment des valeurs importantes d'écart latéral par rapport au centre de la voie ou l'apparition de survirage.

Le document KR20170114660 qui divulgue un procédé pour compenser le caractère sur-vireur ou sous-vireur d'un véhicule. Une première mesure est faite avec une équation de l'angle des roues directrices en trajectoire circulaire. La mesure est affinée au moyen de comparaisons avec une valeur nominale et de taux de variations.

Cependant, l'étalonnage du procédé réalisé lors de la première mesure n'est plus actualisé. Le procédé ne prend pas en compte les variations des paramètres physiques du véhicule intervenues après la première mesure.

Le document US8914213 divulgue un procédé pour calculer les frottements induits pas la route sur le véhicule. Le procédé met en oeuvre un gradient de sous-virage prédéfinie par calibration le gradient de sous-virage n'est donc pas actualisé lors de la variation de paramètres physiques du véhicule.

On pourra en outre se référer au document US20030158641 qui divulgue un procédé utilisant l'équation de l'angle des roues en trajectoire circulaire pour recaler un modèle de référence du système d'amélioration de la stabilité du véhicule.

Cependant, les variations des paramètres physiques du véhicule ne sont pas prises en compte.

Il est donc proposé de pallier tout ou partie des inconvénients des dispositifs de contrôle en temps réel de trajectoire selon l'état de la technique, notamment en rendant le dispositif de contrôle en temps réel de trajectoire plus robuste en prise de virage, en adaptant la commande du module anticipateur en fonction des variations des paramètres physiques du véhicule.

Au vu de ce qui précède, l'invention propose un procédé de contrôle en temps réel de trajectoire d'un véhicule automobile pour compenser la courbure d'un virage sur la voie du véhicule.

Le procédé comprend la modification d'un gradient de sous-virage d'un module anticipateur lors de la détection du survirage du véhicule par rapport à sa configuration nominale de manière à diminuer l'écart latéral entre le centre de gravité du véhicule et le centre de la voie du véhicule.

Le procédé de contrôle est notamment adapté pour un véhicule équipé d'une direction assistée électrique.

Selon une caractéristique, le véhicule est survireur par rapport à sa configuration nominale lorsqu'un paramètre de détection est non nul lorsque le véhicule négocie le virage.

De préférence, le paramètre de détection comprend l'intégrale de la position latérale du véhicule ou l'intégrale de la position latérale du véhicule divisée par l'intégrale de la vitesse longitudinale du véhicule ou l'intégrale d'un angle de braquage de suivi de trajectoire rectiligne.

Avantageusement, le procédé comprend :

a) lors du démarrage d'un cycle de conduite, l'initialisation du gradient de sous-virage à une valeur de gradient de sous virage initiale calculée à partir d'une moyenne pondérée entre la valeur d'un gradient de sous-virage nominal et la valeur d'un gradient de sous-virage d'un cycle de conduite précédent, et l'initialisation d'un gain de sous-virage à une valeur d'initialisation prédéfinie,

b) la détermination de la valeur du paramètre de détection lorsque le véhicule négocie le virage,

c) la sauvegarde de la valeur du paramètre de détection lorsque le paramètre de détection est nul ou lorsque le véhicule est sorti du virage,

d) la recalcule de la valeur du gain de sous-virage à partir du paramètre de détection sauvegardée, d'un gain de convergence et de la valeur précédente du gain de sous-virage,

e) le calcul d'un gradient de sous-virage corrigé en multipliant le gradient de sous virage initiale par le gain de sous-virage recalculé et la sauvegarde de la valeur du gradient de sous-virage corrigé, et

f) lorsque le véhicule suit une trajectoire en ligne droite durant ledit cycle de conduite, l'actualisation de la valeur du gradient de sous-virage à la valeur du gradient de sous-virage corrigé et la sauvegarde de la valeur du gradient de sous-virage.

De préférence, le procédé comprend la répétition des étapes b), c), d), e) et f) lorsque le véhicule négocie un deuxième virage.

L'invention a également pour objet un module d'apprentissage pour un dispositif de contrôle en temps réel de trajectoire d'un véhicule automobile pour compenser la courbure d'un virage sur la voie du véhicule.

Le module d'apprentissage est configuré pour modifier un gradient de sous-virage d'un module anticipateur dudit dispositif de contrôle lorsque que le véhicule est survireur par rapport à sa configuration nominale de manière à diminuer l'écart latéral entre le centre de gravité du véhicule et le centre de la voie du véhicule.

Le véhicule peut être équipé par exemple d'une direction assistée électrique pilotée par le module d'apprentissage.

De préférence, le module d'apprentissage est en outre configuré pour déterminer si le véhicule est survireur par rapport à sa configuration nominale à partir d'un paramètre de détection déterminé lorsque le véhicule négocie le virage.

Avantageusement, le paramètre de détection comprend l'intégrale de la position latérale du véhicule ou l'intégrale de la position latérale du véhicule divisée par l'intégrale de la vitesse longitudinale du véhicule ou l'intégrale d'un angle de braquage de suivi de trajectoire rectiligne du véhicule.

Selon une caractéristique, le module d'apprentissage comprend une unité de traitement, l'unité de traitement étant configurée pour :

g) lors du démarrage d'un cycle de conduite, calculer une valeur de gradient de sous virage initiale à partir d'une moyenne pondérée entre la valeur d'un gradient de sous-virage nominal et la valeur d'un gradient de sous-virage d'un cycle de conduite précédent, et initialiser un gain de sous-virage à une valeur d'initialisation prédéfinie ;

h) déterminer la valeur du paramètre de détection lorsque le véhicule négocie le virage ;

i) sauvegarder dans une mémoire la valeur du paramètre de détection lorsque le paramètre de détection est nul ou lorsque le véhicule est sorti du virage,

j) recalculer la valeur du gain de sous-virage à partir du paramètre de détection sauvegardée, d'un gain de convergence et de la valeur précédente du gain de sous-virage ;

k) calculer un gradient de sous-virage corrigé en multipliant le gradient de sous virage initiale par le gain de sous-virage recalculé et sauvegarder la valeur du gradient de sous-virage corrigé dans la mémoire, et

1) déterminer lorsque le véhicule suit une trajectoire en ligne droite durant ledit cycle de conduite,

le module d'apprentissage étant configuré pour actualiser la valeur du gradient de sous-virage à la valeur du gradient de sous-virage corrigé et sauvegarder la valeur du gradient de sous-virage.

L'invention a également pour objet un dispositif de contrôle en temps réel de trajectoire d'un véhicule pour compenser la courbure d'un virage sur une voie d'un véhicule comprenant un module d'apprentissage tel que défini précédemment, un module anticipateur pour compenser la courbure du virage en déterminant un angle de roue à partir d'un gradient de sous-virage, le module d'apprentissage étant configuré pour modifier la valeur du gradient de sous-virage du module anticipateur.

D'autres buts, caractéristiques et avantages de l'invention apparaîtront à la lecture de la description suivante, donnée uniquement à titre d'exemple non limitatif, et faite en référence aux dessins annexés sur lesquels :

[Fig 1] dont il a déjà été fait mention, illustre schématiquement un dispositif de contrôle en temps réel de trajectoire d'un véhicule selon l'état de la technique ;

[Fig 2] illustre schématiquement un mode de réalisation d'un dispositif de contrôle en temps réel de trajectoire d'un véhicule selon l'invention ;

[Fig 3] illustre schématiquement un mode de réalisation du module anticipateur selon l'invention ;

[Fig 4] illustre schématiquement un mode de réalisation du module d'apprentissage selon l'invention ;

[Fig 5] illustre schématiquement un véhicule évoluant sur une voie comportant un virage ;

[Fig 6] illustre un mode de mise en oeuvre du dispositif de contrôle en temps réel de trajectoire d'un véhicule selon l'invention ; et

[Fig 7] représente l'évolution temporelle de l'écart latéral suite à l'action du dispositif de contrôle selon l'invention et sans l'intervention du dispositif de contrôle selon l'invention.

On a schématiquement représenté sur la figure 2 un mode de réalisation d'un dispositif 5 de contrôle en temps réel de trajectoire du véhicule 1 pour compenser la courbure $\gamma_{ff}$ d'un virage sur la voie du véhicule 1 selon un aspect de l'invention. Les éléments du dispositif 5 identiques aux éléments constituant le dispositif DISP de la figure 1 portent les mêmes références.

On retrouve le véhicule 1, le dispositif contrôleur 2 pour générer le signal de commande Ust et l'observateur 3 pour générer en temps réel le vecteur d'état estimé $\hat{\xi}$ de suivi de voie rectiligne du véhicule à partir du vecteur $\eta$ de mesures actuelles et du vecteur de mesure $\eta_{eq}$ pseudo-calculé.

La commande Ust est égal à la valeur d'un angle $\delta_{rect}$ de suivi de trajectoire rectiligne.

Le dispositif 5 comprend en outre un module anticipateur 6 pour compenser la courbure $\gamma_{ff}$ du virage et un module d'apprentissage 7 pour modifier un gradient de sous-virage $\Delta_1$ du module anticipateur 6 lorsque que le véhicule 1 est survireur par rapport à sa configuration nominale de manière à diminuer l'écart latéral yl entre le centre de gravité du véhicule et le centre de la voie du véhicule 1.

Le module anticipateur 6 comprend une première entrée 61 reliée au véhicule 1 et recevant le vecteur $\eta$ de mesures actuelles, une deuxième entrée 62 reliée au véhicule 1 et recevant le polynôme y(x), une troisième entrée 53 recevant le signal Sv indicatif de la vitesse V longitudinale du véhicule 1, une quatrième entrée 64 reliée à une sortie 71 du module d'apprentissage 7, une première sortie 65 reliée à l'additionneur de sorte que le signal de commande U soit la somme du signal de commande Ust et d'un signal du commande Ueff généré par le module 6 et une deuxième sortie 66 reliée à la troisième entrée de l'observateur 3.

Le signal de commande U pilote par exemple une direction assistée électrique du véhicule 1.

Le module anticipateur 6 fonctionne en boucle ouverte.

Le module d'apprentissage 7 comprend en outre une première entrée 72 reliée au véhicule 1 et recevant le vecteur $\eta$ de mesures actuelles, une deuxième entrée 73 recevant un signal $S_S$ indicatif d'un démarrage d'un cycle de conduite du véhicule 1 (démarrage du moteur du véhicule 1), et une troisième entrée 74 recevant un signal Sp indicatif de la valeur d'un paramètre de détection $\varepsilon_1$.

Le module d'apprentissage 7 détermine si le véhicule 1 est survireur par rapport à sa configuration nominal à partir du paramètre de détection.

Le paramètre de détection $\varepsilon$ peut comprendre l'intégrale de la position latérale yl du véhicule 1 dans le virage ou l'intégrale de la position latérale yl du véhicule 1 divisée par l'intégrale de la vitesse longitudinale V du véhicule dans le virage ou l'intégrale d'un angle de braquage $\delta_{rect}$ de suivi de trajectoire rectiligne du véhicule.

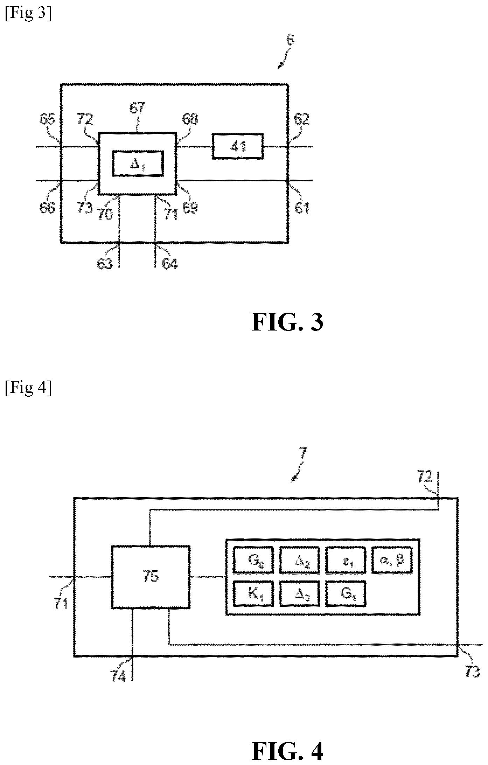

La figure 3 illustre un mode de réalisation du module anticipateur 6.

Le module anticipateur 6 comprend un sous-module 41 de détermination de la courbure $\gamma$ff à partir du polynôme y(x) donnant la géométrie de la ligne directrice de la voie de circulation pour chaque point à la distance x à l'avant du véhicule 1 déterminé par une caméra et relié à l'entrée 62 du module 6 et un sous-module de calcul d'une commande de braquage 67, le sous-module 67 comprenant une première entrée 68 reliée à la sortie du sous-module 41, une deuxième entrée 69 reliée à l'entrée 61 du module 6, une troisième entrée 70 reliée à l'entrée 63 du module 6, une quatrième entrée 71 reliée à l'entrée 64 du module 6, une première sortie 72 reliée à la première sortie 65 du module 6 et une deuxième sortie 73 reliée à la deuxième sortie 66 du module 6.

Le sous-module de calcul d'une commande de braquage 67 calcule l'angle de roue $\delta_{eq}$ correspondant à la courbure $\gamma$ff et le vecteur de mesures $\eta_{eq}$ pseudo-calculé associé.

L'angle de roue $\delta_{eq}$ est donnée par la relation suivante :

$$\delta eq = \gamma ff \cdot (L1 + \Delta_1 \cdot V^2) \quad (7)$$

où le gradient de sous-virage $\Delta_1$ est déterminé et délivré sur la quatrième entrée 64 du module anticipateur 6 par le module d'apprentissage 7.

En variante, le sous-module 41 de détermination de la courbure peut être déporté à l'extérieur du module anticipateur 6.

La figure 4 illustre un mode de réalisation du module d'apprentissage 7.

Le module d'apprentissage 7 comprend une mémoire 74 et une unité de traitement 75 reliée à la mémoire 74.

La mémoire 74 stocke un gain de sous-virage initial $G_0$, un gain de sous-virage corrigé $G_1$, un gain de convergence $K_1$, un gradient de sous-virage nominal $\Delta_2$, un gradient de sous-virage corrigé $\Delta_3$, le paramètre de détection $\varepsilon$ et un jeu de poids $\alpha$, $\beta$.

Le gradient de sous-virage nominal $\Delta_2$ est égal à

$$\Delta_2 = \frac{M_f}{C_f} - \frac{M_r}{C_r} \quad (8)$$

où Cf est la rigidité de dérive des roues avant, $C_r$ est la rigidité de dérive des roues arrière, Mf est la masse appliquée sur le train avant du véhicule et $M_r$ est la masse appliquée sur le train arrière du véhicule de sorte que la masse totale m du véhicule est égale à la somme des masses $M_f$ et $M_r$.

En variante, le module d'apprentissage 7 peut être intégré dans le module anticipateur 6.

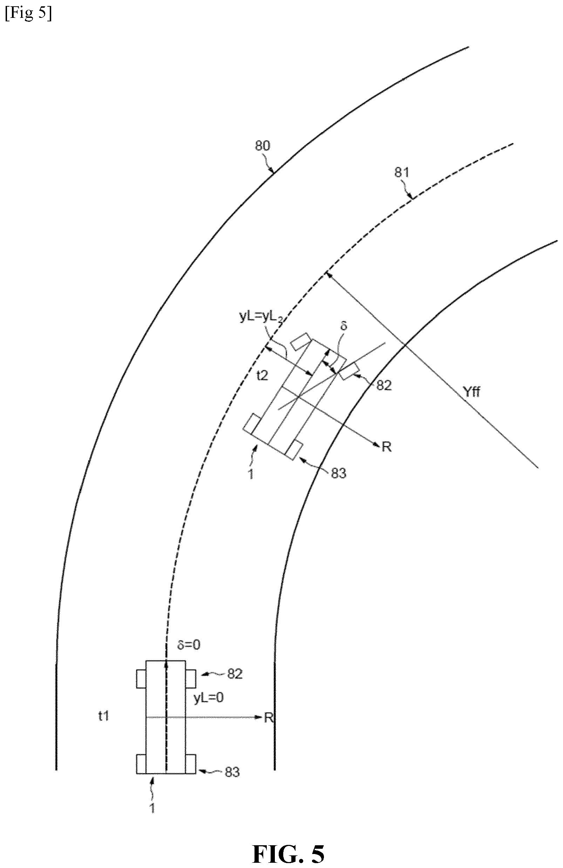

La figure 5 illustre le véhicule 1 évoluant sur une voie 80 comportant le virage de courbure $\gamma$ff.

Le véhicule 1 comprend un repère R dont l'origine est par exemple confondue avec le centre de gravité nominal du véhicule 1.

La trajectoire du véhicule 1 suit une ligne directrice centrale 81 de la voie 80.

A l'instant t1, le véhicule 1 est sur une portion rectiligne de la voie 80. Les roues avant 82 et arrière 83 du véhicule 1 sont alignées, l'écart latéral yl et l'angle de roue $\delta$ sont sensiblement nuls.

A l'instant t2, le véhicule 1 est dans le virage de courbure $\gamma$ff.

Le dispositif 5 relève un écart latéral $yL_2$ non nul entre le centre de gravité nominal du véhicule 1 et la ligne directrice centrale 81 de la voie 80, et détermine une commande de braquage Ust pour compenser l'écart entre le vecteur d'état de consigne $\xi^*$ et le vecteur d'état estimé $\hat{\xi}$, de sorte que l'écart s'annule ou tende vers 0.

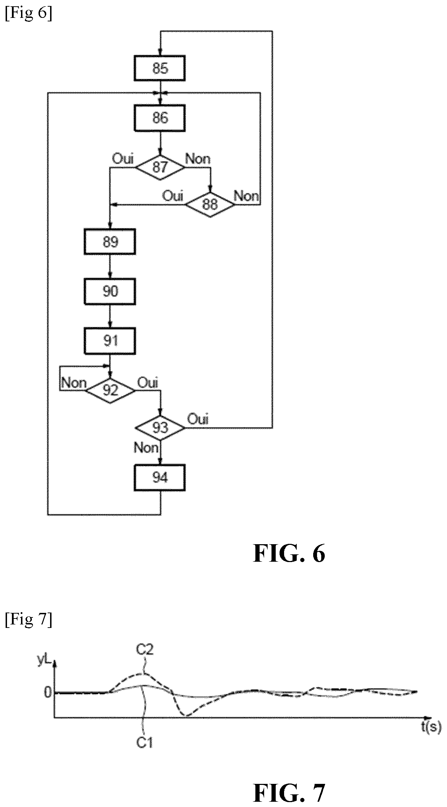

La figure 6 illustre un mode de mise en oeuvre du dispositif 5.

Durant l'étape 85, lors du démarrage d'un cycle de conduite du véhicule 1, l'unité de traitement 75 calcule une valeur de gradient de sous-virage initiale $\Delta_{init}$ :

$$\Delta_{init} = \frac{\alpha \cdot \Delta_3 + \beta \cdot \Delta_2}{\alpha + \beta} \quad (9)$$

et initialise la valeur du gradient de sous-virage $\Delta_1$ du module anticipateur 6 de sorte que :

$$\Delta_1 = \Delta_{init} \quad (10)$$

La valeur des poids $\alpha$ et $\beta$ est choisie par exemple de sorte que $\alpha$ est égal à zéro et $\beta$ est égal pour un véhicule utilitaire afin de prendre en compte une variation importante de la charge.

Comme la variation de la charge par exemple d'une berline ou d'un coupé est plus modérée, les poids sont par exemple choisis de sorte que $\alpha$ et $\beta$ sont égaux à un demi.

En outre, l'unité de traitement initialise le gain de sous-virage corrigé Gi de sorte que les gains de sous-virage corrigé Gi et initial $G_0$ soient égaux.

Le gain initial de sous-virage $G_0$ est par exemple égal à un.

Lorsque le véhicule 1 négocie le virage à l'instant t2 (étape 86), l'unité de traitement 75 détermine la valeur du paramètre de détection $\varepsilon$, l'instant de rentrée et de sortie dans le virage et lorsque le véhicule 1 suit une trajectoire rectiligne à partir du vecteur $\eta$ de mesure actuelle.

Si le paramètre de détection $\varepsilon$ est nul (étape 87) ou si le véhicule 1 est sorti du virage (étape 88), on poursuit à l'étape 89.

Si le paramètre de détection $\varepsilon$ est non nul (étape 87) et le véhicule 1 n'est pas sorti du virage (étape 88), on remonte à l'étape 86.

Durant l'étape 89, l'unité de traitement 75 sauvegarde une valeur du paramètre de détection $\varepsilon_1$ dans la mémoire 74 égale à la valeur du paramètre de détection $\varepsilon$ lorsque le véhicule est sorti du virage en écrasant la valeur du paramètre de détection précédemment sauvegardée.

Puis, à l'étape 90, l'unité de traitement 75 recalcule la valeur du gain de sous-virage Gi à partir du paramètre de détection sauvegardé $\varepsilon_1$, du gain de convergence $K_1$ et de la valeur précédente du gain de sous-virage égale à $G_0$ de sorte que :

$$G_1 = G_0 + K_1 \cdot \varepsilon_1 \quad (11)$$

Lorsque le véhicule 1 négocie des virages supplémentaires durant le cycle de conduite, pour chaque virage négocié, n étant égal au $n^{ième}$ virage, la valeur du gain de sous-virage corrigé $G_n$ est égale à :

$$G_n = G_{n-1} + K_1 \cdot \varepsilon_n \quad (12)$$

La valeur du gain de sous-virage corrigé $G_n$ est sauvegardée dans la mémoire 74 en écrasant la valeur précédemment sauvegardée.

Durant l'étape 91, l'unité de traitement 75 calcule le gradient de sous-virage corrigé $\Delta_3$ de sorte que :

$$\Delta_3 = \Delta_2 \cdot G_n \quad (13)$$

En outre, l'unité de traitement 75 sauvegarde la valeur du gradient de sous-virage corrigé en écrasant la valeur du gradient de sous-virage corrigé précédemment sauvegardée.

Si le véhicule 1 suit une trajectoire rectiligne (étape 92) et l'on se situe toujours dans le même cycle de conduite (étape 83), durant une étape 94, l'unité de traitement 75 actualise la valeur du gradient de sous-virage $\Delta_1$ du module anticipateur 6 de sorte que le gradient de sous-virage $\Delta_1$ soit égal au gradient de sous-virage corrigé $\Delta_3$, la valeur du gradient de sous-virage corrigé $\Delta_3$ étant en outre sauvegardée dans la mémoire 74.

L'actualisation du gradient de sous-virage $\Delta_1$ du module anticipateur 6 s'effectue lorsque le véhicule 1 suit une trajectoire rectiligne pour empêcher une discontinuité du la commande Uff susceptible d'entraîner des changements brutaux de trajectoire du véhicule 1 dégradant le confort des passagers.

Si le véhicule 1 ne suit pas une trajectoire rectiligne (étape 92), on attend jusqu'à ce que le véhicule 1 suit une trajectoire rectiligne.

Si l'on ne situe plus dans le même cycle de conduite (étape 93), on remonte à l'étape 85.

La valeur du gain de convergence $K_1$ est choisi de sorte que le calcul du gradient de sous-virage corrigé $\Delta_3$ converge rapidement.

La figure 7 représentant une courbe C1 de l'évolution temporelle de l'écart latéral yl selon le temps suite à l'action du module d'apprentissage 7 et une courbe C2 de l'évolution temporelle de l'écart latéral yl selon le temps sans action du module d'apprentissage 7, le paramètre de détection comprenant l'intégral de l'écart latéral yl.

On constate que la variation de la courbe C1 est moindre que la variation de la courbe C2.

En modifiant le paramètre de détection, on trouve des courbes similaires.

La modification du gradient de sous-virage du module anticipateur 6 permet de diminuer la valeur yl de l'écart latéral entre le centre de gravité du véhicule 1 et le centre de la voie du véhicule.

L'unité de traitement 75 peut être réalisé par exemple à partir d'un calculateur embarqué.

Il peut s'agir de tout dispositif apte à écrire et lire dans la mémoire 74, calculer la valeur de gradient de sous virage, initialiser le gain de sous-virage, déterminer la valeur du paramètre de détection lorsque le véhicule négocie le virage, recalculer la valeur du gain de sous-virage, et déterminer lorsque le véhicule suit une trajectoire en ligne droite durant ledit cycle de conduite.

Le dispositif 5 de contrôle en temps réel de trajectoire permet de corriger en temps réel, pendant la phase de régulation du LCA, la valeur du gradient de sous-virage pour adapter le gradient de sous-virage à la situation présente du véhicule 1 et ce, automatiquement sans nécessiter aucune intervention humaine, permettant ainsi d'améliorer notamment la sécurité et le confort du conducteur et des passagers.

**Revendications**

1. Procédé de contrôle en temps réel de trajectoire d'un véhicule automobile (1) pour compenser la courbure (Yff) d'un virage sur la voie (80) du véhicule (1), **caractérisé en ce que** le procédé comprend la modification d'un gradient de sous-virage ($\Delta_1$) d'un module anticipateur (6) lors de la détection du survirage du véhicule par rapport à sa configuration nominale de manière à diminuer l'écart latéral (yl) entre le centre de gravité du véhicule et le centre (81) de la voie du véhicule.

2. Procédé selon la revendication 1, dans lequel le véhicule (1) est survireur par rapport à sa configuration nominale lorsqu'un paramètre de détection ($\varepsilon$) est non nul lorsque le véhicule négocie le virage.

3. Procédé selon la revendication 2, dans lequel le paramètre de détection ($\varepsilon$) comprend l'intégrale de la position latérale ($\int -yl$) du véhicule ou l'intégrale de la position latérale du véhicule divisée par l'intégrale de la vitesse longitudinale ($\frac{\int -yl}{\int V}$) du véhicule ou l'intégrale d'un angle de braquage de suivi de trajectoire rectiligne ($\delta_{rect}$).

4. Procédé selon l'une des revendications 2 et 3, comprenant :

   a) lors du démarrage d'un cycle de conduite, l'initialisation du gradient de sous-virage ($\Delta_1$) à une valeur de gradient de sous virage initiale ($\Delta_{init}$) calculée à partir d'une moyenne pondérée entre la valeur d'un gradient de sous-virage nominal ($\Delta_2$) et la valeur d'un gradient de sous-virage d'un cycle de conduite précédent ($\Delta_3$), et l'initialisation d'un gain de sous-virage (Gn) à une valeur d'initialisation prédéfinie ($G_0$),
   b) la détermination de la valeur du paramètre de détection ($\varepsilon$) lorsque le véhicule négocie le virage,
   c) la sauvegarde de la valeur du paramètre de détection ($\Delta_3$) lorsque le paramètre de détection est nul ou lorsque le véhicule est sorti du virage,
   d) le recalcule de la valeur du gain de sous-virage à partir du paramètre de détection sauvegardée, d'un gain de convergence ($K_1$) et de la valeur précédente du gain de sous-virage,
   e) le calcul d'un gradient de sous-virage corrigé ($\Delta_3$) en multipliant le gradient de sous virage initiale par le gain de sous-virage recalculé et la sauvegarde de la valeur du gradient de sous-virage corrigé, et
   f) lorsque le véhicule suit une trajectoire en ligne droite durant ledit cycle de conduite, l'actualisation de la valeur du gradient de sous-virage à la valeur du gradient de sous-virage corrigé et la sauvegarde de la valeur du gradient de sous-virage.

5. Procédé selon la revendication 4, comprenant la répétition des étapes b), c), d), e) et f) lorsque le véhicule négocie un deuxième virage.

6. Module d'apprentissage (7) pour un dispositif de contrôle en temps réel de trajectoire d'un véhicule automobile pour compenser la courbure (Yff) d'un virage sur la voie (80) du véhicule (1), **caractérisé en ce que** le module d'apprentissage est configuré pour modifier un gradient de sous-virage ($\Delta_1$) d'un module anticipateur (6) dudit dispositif de contrôle lorsque que le véhicule est survireur par rapport à sa configuration nominale de manière à diminuer l'écart latéral (yl) entre le centre de gravité du véhicule et le centre (81) de la voie du véhicule.

7. Module d'apprentissage selon la revendication 6, configuré en outre pour déterminer si le véhicule (1) est survireur par rapport à sa configuration nominale à partir d'un paramètre de détection ($\varepsilon$) déterminé lorsque le véhicule négocie le virage.

8. Module d'apprentissage selon la revendication 7, dans lequel le paramètre de détection ($\varepsilon$) comprend l'intégrale de la position latérale ($\int$-yl) du véhicule ou l'intégrale de la position latérale du véhicule divisée par l'intégrale de la vitesse longitudinale ( $\dfrac{\int -yl}{\int V}$ ) du véhicule ou l'intégrale d'un angle de braquage de suivi de trajectoire rectiligne ($\delta_{rect}$) du véhicule.

9. Module d'apprentissage selon l'une des revendications 7 et 8, comprenant une unité de traitement (75), l'unité de traitement étant configurée pour :

g) lors du démarrage d'un cycle de conduite, calculer une valeur de gradient de sous virage initiale ($\Delta_{init}$) à partir d'une moyenne pondérée entre la valeur d'un gradient de sous-virage nominal ($\Delta_2$) et la valeur d'un gradient de sous-virage d'un cycle de conduite précédent ($\Delta_3$), et initialiser un gain de sous-virage (Gn) à une valeur d'initialisation prédéfinie ($G_0$) ;
h) déterminer la valeur du paramètre de détection lorsque le véhicule négocie le virage ;
i) sauvegarder dans une mémoire la valeur du paramètre de détection lorsque le paramètre de détection est nul ou lorsque le véhicule est sorti du virage,
j) recalculer la valeur du gain de sous-virage à partir du paramètre de détection sauvegardée, d'un gain de convergence ($K_1$) et de la valeur précédente du gain de sous-virage ;
k) calculer un gradient de sous-virage corrigé ($\Delta_3$) en multipliant le gradient de sous virage initiale par le gain de sous-virage recalculé et sauvegarder la valeur du gradient de sous-virage corrigé, et
1) déterminer lorsque le véhicule suit une trajectoire en ligne droite durant ledit cycle de conduite et sauvegarder la valeur du gradient de sous-virage,
le module d'apprentissage étant configuré pour actualiser la valeur du gradient de sous-virage à la valeur du gradient de sous-virage corrigé.

10. Dispositif (5) de contrôle en temps réel de trajectoire d'un véhicule pour compenser la courbure (Yff) d'un virage sur une voie (80) d'un véhicule (1) comprenant un module d'apprentissage (6) selon l'une des revendications 6 à 9, un module anticipateur (7) pour compenser la courbure (Yff) du virage en déterminant un angle de roue ($\delta_{eq}$) à partir d'un gradient de sous-virage, le module d'apprentissage étant configuré pour modifier la valeur du gradient de sous-virage du module anticipateur.

**Patentansprüche**

1. Verfahren zur Echtzeit-Fahrspurkontrolle eines Kraftfahrzeugs (1), um die Krümmung (Yff) einer Kurve auf der Fahrbahn (80) des Fahrzeugs (1) zu kompensieren, **dadurch gekennzeichnet, dass** das Verfahren die Änderung eines Untersteuerungsgradienten ($\Delta_1$) eines Antizipationsmoduls (6) bei der Erkennung der Übersteuerung des Fahrzeugs bezüglich seiner Sollkonfiguration enthält, um den seitlichen Abstand (yl) zwischen dem Schwerpunkt des Fahrzeugs und der Mitte (81) der Fahrbahn des Fahrzeugs zu verringern.

2. Verfahren nach Anspruch 1, wobei das Fahrzeug (1) bezüglich seiner Sollkonfiguration übersteuert, wenn ein Erkennungsparameter ($\varepsilon$) ungleich Null ist, wenn das Fahrzeug die Kurve nimmt.

3. Verfahren nach Anspruch 2, wobei der Erkennungsparameter ($\varepsilon$) das Integral der seitlichen Position (f-yl) des Fahrzeugs oder das Integral der seitlichen Position des Fahrzeugs dividiert durch das Integral der Längsgeschwindigkeit ($\frac{\int -yl}{\int V}$) des Fahrzeugs oder das Integral eines Nachführungslenkeinschlags einer geradlinigen Fahrspur ($\delta_{rect}$) enthält.

4. Verfahren nach einem der Ansprüche 2 und 3, das enthält:

    a) beim Start eines Fahrzyklus die Initialisierung des Untersteuerungsgradienten ($\Delta_1$) auf einen Untersteuerungsgradient-Ausgangswert ($\Delta_{init}$), berechnet ausgehend von einem gewichteten Mittelwert zwischen dem Wert eines Untersteuerung-Sollgradienten ($\Delta_2$) und dem Wert eines Untersteuerungsgradienten ($\Delta_3$) eines vorhergehenden Fahrzyklus, und die Initialisierung einer Untersteuerungsverstärkung (Gn) auf einen vordefinierten Initialisierungswert ($G_0$),
    b) die Bestimmung des Werts des Erkennungsparameters ($\varepsilon$), wenn das Fahrzeug die Kurve nimmt,
    c) die Sicherung des Werts des Erkennungsparameters ($\Delta_3$), wenn der Erkennungsparameter Null ist, oder wenn das Fahrzeug die Kurve verlassen hat,
    d) die Neuberechnung des Werts der Untersteuerungsverstärkung ausgehend vom gesicherten Erkennungsparameter, von einer Konvergenzverstärkung ($K_1$) und vom vorhergehenden Wert der Untersteuerungsverstärkung,
    e) die Berechnung eines korrigierten Untersteuerungsgradienten ($\Delta_3$) durch Multiplizieren des Untersteuerung-Ausgangsgradienten mit der neu berechneten Untersteuerungsverstärkung, und die Sicherung des Werts des korrigierten Untersteuerungsgradienten, und
    f) wenn das Fahrzeug während des Fahrzyklus einer geradlinigen Fahrspur folgt, die Aktualisierung des Werts des Untersteuerungsgradienten auf den Wert des korrigierten Untersteuerungsgradienten und die Sicherung des Werts des Untersteuerungsgradienten.

5. Verfahren nach Anspruch 4, das die Wiederholung der Schritte b), c), d), e) und f) enthält, wenn das Fahrzeug eine zweite Kurve nimmt.

6. Lernmodul (7) für eine Vorrichtung zur Echtzeit-Fahrspurkontrolle eines Kraftfahrzeugs, um die Krümmung (Yff) einer Kurve auf der Fahrbahn (80) des Fahrzeugs (1) zu kompensieren, **dadurch gekennzeichnet, dass** das Lernmodul konfiguriert ist, einen Untersteuerungsgradienten ($\Delta_1$) eines Antizipationsmoduls (6) der Kontrollvorrichtung zu ändern, wenn das Fahrzeug bezüglich seiner Sollkonfiguration übersteuert, um den seitlichen Abstand (yl) zwischen dem Schwerpunkt des Fahrzeugs und der Mitte (81) der Fahrspur des Fahrzeugs zu verringern.

7. Lernmodul nach Anspruch 6, das konfiguriert ist, zu bestimmen, ob das Fahrzeug (1) bezüglich seiner Sollkonfiguration übersteuert, ausgehend von einem bestimmten Erkennungsparameter ($\varepsilon$), wenn das Fahrzeug die Kurve nimmt.

8. Lernmodul nach Anspruch 7, wobei der Erkennungsparameter ($\varepsilon$) das Integral der seitlichen Position (f-yl) des Fahrzeugs oder das Integral der seitlichen Position des Fahrzeugs dividiert durch das Integral der Längsgeschwindigkeit ($\frac{\int -yl}{\int V}$) des Fahrzeugs oder das Integral eines Nachführungslenkeinschlags einer geradlinigen Fahrspur ($\delta_{rect}$) des Fahrzeugs enthält.

9. Lernmodul nach einem der Ansprüche 7 und 8, das eine Verarbeitungseinheit (75) enthält, wobei die Verarbeitungseinheit konfiguriert ist, um:

    g) beim Start eines Fahrzyklus einen Untersteuerungsgradient-Ausgangswert ($\Delta_{init}$) ausgehend von einem gewichteten Mittelwert zwischen dem Wert eines Untersteuerung-Sollgradienten ($\Delta_2$) und dem Wert eines Untersteuerungsgradienten ($\Delta_3$) eines vorhergehenden Fahrzyklus zu berechnen, und eine Untersteuerungsverstärkung (Gn) auf einen vordefinierten Initialisierungswert ($G_0$) zu initialisieren;
    h) den Wert des Erkennungsparameters zu bestimmen, wenn das Fahrzeug die Kurve nimmt;
    i) den Wert des Erkennungsparameters in einem Speicher zu sichern, wenn der Erkennungsparameter Null ist oder wenn das Fahrzeug die Kurve verlassen hat,
    j) den Wert der Untersteuerungsverstärkung ausgehend vom gesicherten Erkennungsparameter, von einer

Konvergenzverstärkung ($K_1$) und vom vorhergehenden Wert der Untersteuerungsverstärkung neu zu berechnen;

k) einen korrigierten Untersteuerungsgradienten ($\Delta_3$) durch Multiplizieren des Untersteuerung-Ausgangsgradienten mit der neu berechneten Untersteuerungsverstärkung zu berechnen und den Wert des korrigierten Untersteuerungsgradienten zu sichern, und

l) zu bestimmen, wenn das Fahrzeug während des Fahrzyklus einer geradlinigen Fahrspur folgt, und den Wert des Untersteuerungsgradienten zu sichern,

wobei das Lernmodul konfiguriert ist, den Wert des Untersteuerungsgradienten auf den Wert des korrigierten Untersteuerungsgradienten zu aktualisieren.

10. Vorrichtung (5) zur Echtzeit-Fahrspurkontrolle eines Fahrzeugs, um die Krümmung (Yff) einer Kurve auf einer Fahrbahn (80) eines Fahrzeugs (1) zu kompensieren, die ein Lernmodul (6) nach einem der Ansprüche 6 bis 9, ein Antizipationsmodul (7) zur Kompensation der Krümmung (Yff) der Kurve durch Bestimmung eines Radwinkels ($\delta_{eq}$) ausgehend von einem Untersteuerungsgradienten enthält, wobei das Lernmodul konfiguriert ist, den Wert des Untersteuerungsgradienten des Antizipationsmoduls zu ändern.

## Claims

1. Method for controlling, in real time, a path of a motor vehicle (1), to compensate for the curvature ($\gamma$ff) of a bend in the lane (80) of the vehicle (1), **characterized in that** the method comprises modifying an understeer gradient ($\Delta_1$) of an anticipator module (6) on detection of oversteering of the vehicle with respect to its nominal configuration, so as to decrease the lateral deviation (yl) between the centre of gravity of the vehicle and the centre (81) of the lane of the vehicle.

2. Method according to Claim 1, wherein the vehicle (1) is being oversteered with respect to its nominal configuration when a detection parameter ($\varepsilon$) is non-zero when the vehicle is negotiating the bend.

3. Method according to Claim 2, wherein the detection parameter ($\varepsilon$) comprises the integral of the lateral position ($\int -$ yl) of the vehicle or the integral of the lateral position of the vehicle divided by the integral of the longitudinal speed

($\dfrac{\int -yl}{\int V}$) of the vehicle or the integral of a straight-path steering angle ($\delta_{rect}$).

4. Method according to one of Claims 2 and 3, comprising:

a) on start-up of a driving cycle, initializing the understeer gradient ($\Delta_1$) to an initial understeer-gradient value ($\Delta_{init}$) computed on the basis of a weighted average of the value of a nominal understeer gradient ($\Delta_2$) and of the value of an understeer gradient of a previous driving cycle ($\Delta_3$), and initializing an understeer gain (Gn) to a predefined initialization value ($G_0$),

b) determining the value of the detection parameter ($\varepsilon$) when the vehicle is negotiating the bend,

c) saving the value of the detection parameter ($\Delta_3$) when the detection parameter is zero or when the vehicle has exited the bend,

d) recomputing the value of the understeer gain on the basis of the saved detection parameter, of a convergence gain ($K_1$) and of the previous value of the understeer gain,

e) computing a corrected understeer gradient ($\Delta_3$) by multiplying the initial understeer gradient by the recomputed understeer gain and saving the value of the corrected understeer gradient, and

f) when the vehicle is following a straight-line path during said driving cycle, updating the value of the understeer gradient to the value of the corrected understeer gradient and saving the value of the understeer gradient.

5. Method according to Claim 4, comprising repeating steps b), c), d), e) and f) when the vehicle is negotiating a second bend.

6. Learning module (7) for a device for controlling, in real time, a path of a motor vehicle, to compensate for the curvature ($\gamma$ff) of a bend in the lane (80) of the vehicle (1), **characterized in that** the learning module is configured to modify an understeer gradient ($\Delta_1$) of an anticipator module (6) of said controlling device when the vehicle is being oversteered with respect to its nominal configuration, so as to decrease the lateral deviation (yl) between the centre of gravity of the vehicle and the centre (81) of the lane of the vehicle.

7. Learning module according to Claim 6, further configured to determine whether the vehicle (1) is being oversteered with respect to its nominal configuration on the basis of a detection parameter ($\varepsilon$) determined when the vehicle is negotiating the bend.

8. Learning module according to Claim 7, wherein the detection parameter ($\varepsilon$) comprises the integral of the lateral position ($\int -yl$) of the vehicle or the integral of the lateral position of the vehicle divided by the integral of the longitudinal speed ( $\dfrac{\int -yl}{\int V}$ ) of the vehicle or the integral of a straight-path steering angle ($\delta_{rect}$) of the vehicle.

9. Learning module according to one of Claims 7 and 8, comprising a processing unit (75), the processing unit being configured to:

   g) on start-up of a driving cycle, compute an initial understeer-gradient value ($\Delta_{init}$) on the basis of a weighted average of the value of a nominal understeer gradient ($\Delta_2$) and of the value of an understeer gradient of a previous driving cycle ($\Delta_3$), and initialize an understeer gain (Gn) to a predefined initialization value ($G_0$);
   h) determine the value of the detection parameter when the vehicle is negotiating the bend;
   i) save in a memory the value of the detection parameter when the detection parameter is zero or when the vehicle has exited the bend,
   j) recompute the value of the understeer gain on the basis of the saved detection parameter, of a convergence gain ($K_1$) and of the previous value of the understeer gain;
   k) compute a corrected understeer gradient ($\Delta_3$) by multiplying the initial understeer gradient by the recomputed understeer gain and save the value of the corrected understeer gradient, and
   1) determine when the vehicle is following a straight-line path during said driving cycle and save the value of the understeer gradient,
   the learning module being configured to update the value of the understeer gradient to the value of the corrected understeer gradient.

10. Device (5) for controlling, in real time, a path of a vehicle, to compensate for the curvature (Yff) of a bend in a lane (80) of a vehicle (1), comprising a learning module (6) according to one of Claims 6 to 9, an anticipator module (7) for compensating for the curvature (Yff) of the bend by determining a wheel angle ($\delta_{eq}$) on the basis of an understeer gradient, the learning module being configured to modify the value of the understeer gradient of the anticipator module.

[Fig 1]

# ART ANTERIEUR

**FIG. 1**

[Fig 2]

**FIG. 2**

[Fig 3]

**FIG. 3**

[Fig 4]

**FIG. 4**

[Fig 5]

FIG. 5

[Fig 6]

## FIG. 6

[Fig 7]

## FIG. 7

**EP 4 069 566 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- KR 20170114660
- US 8914213 B
- US 20030158641 A

**Littérature non-brevet citée dans la description**

- **SIMON MUSTAKI.** *Outils de pré-calibration numérique des lois de commande de systèmes: application aux aides à la conduite et au véhicule autonome*
- **CHANHEE JUNG.** *Parameter adaptive steering control for autonomous driving*